# EUROPÄISCHE PATENTSCHRIFT

(11) **EP 0 995 526 B1**
(45) Veröffentlichungstag und Bekanntmachung des Hinweises auf die Patenterteilung: **07.07.2004**
(21) Anmeldenummer: 99118688.3
(22) Anmeldetag: 22.09.1999
(51) Int. Cl.: B23B 27/20

(54) **Diamant-Schneidwerkzeug**
Diamond cutting tool
Outil de coupe en diamant

(30) Priorität: 24.10.1998 DE 19849077
(43) Veröffentlichungstag der Anmeldung: 26.04.2000
(73) Patentinhaber: Bayerische Motoren Werke Aktiengesellschaft, 80809 München (DE)
(72) Erfinder: Rauch, Helmut, 86836 Untermeitingen (DE)

(56) Entgegenhaltungen:
- DE-A- 2 162 682
- DE-A- 2 819 532
- US-A- 5 022 797
- US-A- 5 133 332

## Beschreibung

Die Erfindung bezieht sich auf ein Verfahren zur spanabhebenden Bearbeitung mit einem Diamant-Schneidwerkzeug, insbesondere Drehen.

Zur spanabhebenden Bearbeitung ist es in der industriellen Fertigung bekannt, natürliche Einkristall-Diamanten als Schneidwerkzeuge einzusetzen, z.B. gemäß der DE-A 2 323 808. Aus der europäischen Patentanmeldung EP-A 0 418 959 ist es ferner bekannt, zur spanabhebenden Bearbeitung einen synthetischen Einkristall-Diamanten als Schneidwerkzeug zu verwenden. Demgegenüber haben in neuerer Zeit als Schneidwerkzeuge vor allem polykristalline Diamanten in die industrielle Fertigung Eingang gefunden.

Der Einsatz eines polykristallinen Diamanten als Schneidwerkzeug zur spanabhebenden Bearbeitung einer triboligischen Lauf- oder Gleitfläche an einem Bauteil aus einer übereutektischen Aluminium-Silizium-Legierung erfordert mehrere spanabhebende Vorgänge durch ein schneidendes Werkzeug, wobei für ein mehrschrittiges erforderliches Feinbearbeiten, beispielsweise durch Honen, ein erhebliches Aufmaß belassen werden muß.

Diese für die Fertigbearbeitung der Lauf- oder Gleitfläche durch Fein- oder Feinstbearbeitung durch Honen erforderliche Bearbeitungszugabe ist arbeits- und kostenaufwendig. Als Ursache hierfür ist die mit der Verwendung eines polykristallinen Diamanten nachteiligerweise gegebene erheblich zerstörte Randzonentiefe, die erst durch ein mehrfaches Fein- bzw. Feinstbearbeiten zu beseitigen ist zur Erzielung einer funktionsgerechten Oberflächentopographie.

Der Erfindung liegt die Aufgabe zugrunde, ein verbessertes Verfahren zur spanabhebenden Bearbeitung einer übereutektischen Aluminium-Silizium-Legierung mit einem Diamant-Schneidwerkzeug aufzuzeigen.

Diese Aufgabe ist mit dem Patentanspruch gelöst. Die Bearbeitung mit einem synthetischen Einkristall-Diamant mit der angegebenen Schneidengeometrie ergibt in vorteilhafter Weise eine äußerst geringe Zerstörungstiefe der Randzone mit dem weiteren überraschenden Vorteil, daß auch Silizium-Kristalle zerspant werden. Die erfindungsgemäß gestaltete Diamant-Schneide ist bei optimaler Zuordnung der Schneidflächen relativ zu den Kristall-Achsen in vorteilhafter Weise erheblich schärfer durch einen gegen Null gehenden Schneidenradius. Weiter weist der synthetische bzw. künstliche Einkristall-Diamant sehr niedrige Reibwerte auf, so daß durch fehlende Adhäsion Aufbauschneiden sich nicht ausbilden können und somit ein sauberer Schnitt gewährleistet ist.

Als weiterer Vorteil des erfindungsgemäßen Verfahrens ist ein äußerst geringes Aufmaß für eine Fein- bzw. Feinstbearbeitung zu nennen, das in einem Verfahrensschritt ausgeführt werden kann, sofern es überhaupt erforderlich ist. Weiter vorteilhaft sind die sehr niedrigen Schnittkräfte, die es erlauben, eine hohe Genauigkeit der Fertigmaße prozeßsicher zu erzielen.

Weitere Ausgestaltungen der Erfindung sind in Unteransprüchen beschrieben.

Die Erfindung ist anhand einer Zeichnung und zweier Bilder näher beschrieben. Es zeigt
- Figur 1: eine erfindungsgemäße Diamant-Schneide in perspektivischer Darstellung,
- Figur 2: eine nach dem erfindungsgemäßen Verfahren bearbeitete Fläche einer übereutektischen Al-Si-Legierung und
- Figur 3: eine mit einem herkömmlichen polykristallinen Diamanten bearbeitete Fläche einer Al-Si-Legierung.

Ein Verfahren zur spanabhebenden Bearbeitung mit einem Diamant-Schneidwerkzeug ist zur Bearbeitung eines Bauteiles aus einer übereutektischen Aluminium-Silizium-Legierung hinsichtlich Arbeits- und Kostenaufwand wesentlich zu verbessern.

Für diese spanabhebende Bearbeitung findet erfindungsgemäß ein synthetischer Einkristall-Diamant als Schneidwerkzeug Verwendung, wobei eine Diamant-Schneide mit einem Spitzenradius r = 0,2 - 0,5 mm, einem Freiwinkel α = 5° - 8°, einem Spanwinkel γ = 0°- + 6° und einem Hauptanstellwinkel κ = 90° - 75° in Anwendung kommt.

Vorzugsweise wird zur Bearbeitung einer übereutektischen Al-Si-Legierung mit Siliziumkörnem der Größe 5 bis 100 µm eine Diamant-Schneide mit einem Spitzenradius r = 0,4 mm, einem Freiwinkel α = 7°, einem Spanwinkel γ = 0° und einem Hauptanstellwinkel κ = 75° verwendet.

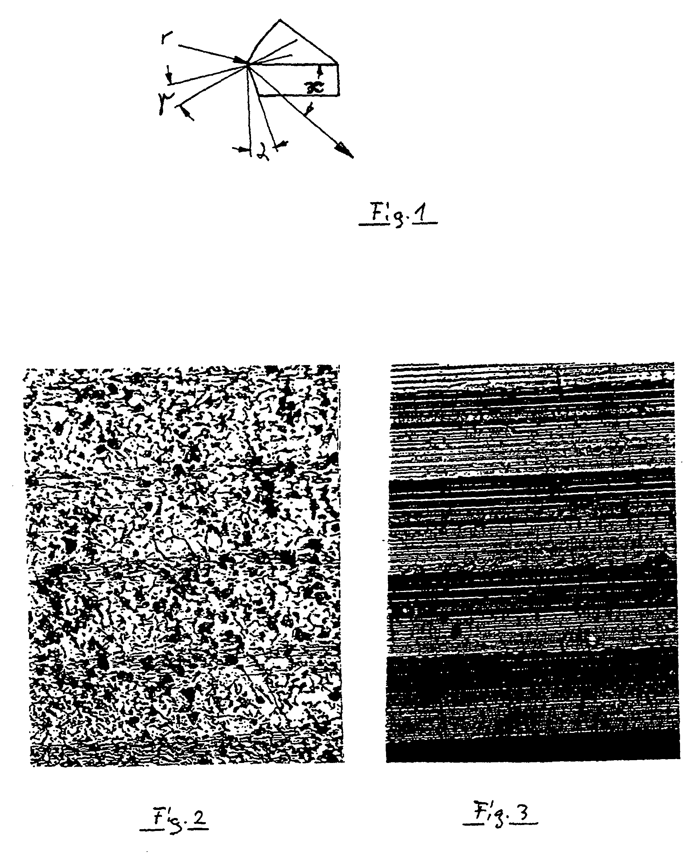

Mit diesem in Figur 1 dargestellten, erfindungsgemäßen Diamant-Schneidwerkzeug ergeben sich einerseits in vorteilhafter Weise verringerte Schnittkräfte, andererseits ist die Randzone in ihrer Tiefe wesentlich geringer zerstört, so daß das erfindunsgemäße Verfahren sich vorteilhaft eignet zur Verwendung bei tribologischen Lauf-/Gleitflächen eines Bauteiles einer übereutektischen Al-Si-Legierung.

Bei optimaler Zuordnung der vorgenannten Schneiden-Winkel relativ zu den Kristallachsen des synthetischen Einkristall-Diamanten ist ein gegen den Wert = 0 gehender Schneidenradius wesentlich für die hohe Oberflächenqualität der bearbeiteten Fläche, wobei hierfür das Zerschneiden der Silizium-Körner in der Aluminium-Silizium-Matrix wesentlich ursächlich ist.

Die Abbildung 2 zeigt eine nach dem erfindungsgemäßen Verfahren spanabhebend bearbeitete Fläche an einem Bauteil aus einer übereutektischen Al-Si-Legierung. Demgegenüber zeigt die Abbildung 3 eine mit polykristallinem Diamant bearbeitete Fläche desselben Werkstoffes, die in charakteristischer Weise zugeschmiert erscheint.

Das erfindungsgemäße Verfahren findet daher bevorzugt Anwendung zum Feindrehen einer Zylinderlaufbahn in einer Zylinderlaufbuchse oder in einer Zylinderbohrung eines Zylinder-Kurbelgehäuses, beide jeweils aus einer übereutektischen Aluminium-Silizium-Legierung.

Im Anschluß an eine Vordrehen der Zylinderlaufbahn wird diese gemäß dem erfindungsgemäßen Verfahren feingedreht. Die damit erreichte hohe Maß- und Formgenauigkeit kann gegebenenfalls durch einschrittiges Honen entsprechend einem geringen Aufmaß weiter gesteigert werden.

## Patentansprüche

1. Verfahren zur spanabhebenden Bearbeitung mit einem Diamant-Schneidwerkzeug, insbesondere Drehen, **dadurch gekennzeichnet,**
- **daß** zur Bearbeitung eines Bauteiles aus einer übereutektischen Aluminium-Silizium-Legierung ein synthetischer Einkristall-Diamant verwendet wird, wobei
- eine Diamant-Schneide mit einem Spitzenradius r = 0,2 - 0,5 mm, einem Freiwinkel α = 5° - 8°, einem Spanwinkel γ = 0° - +6° und einem Hauptanstellwinkel κ = 90° - 75° in Anwendung kommt.

2. Verfahren nach Anspruch 1, **dadurch gekennzeichnet, daß** zur Bearbeitung einer Al-Si-Legierung mit Siliziumkörnern der Größe 5 - 100 µm eine Diamant-Schneide mit einem Spitzenradius r = 0,4 mm, einem Freiwinkelα = 7°, einem Spanwinkel γ = 0° und einem Hauptanstellwinkel κ = 75° verwendet wird.

3. Verfahren nach einem der Ansprüche 1 oder 2, **gekennzeichnet durch** die Verwendung bei tribologischen Lauf-/Gleitflächen eines Bauteiles aus einer Al-Si-Legierung.

4. Verfahren nach Anspruch 3, **dadurch gekennzeichnet, daß** eine Zylinderlaufbahn in einer Zylinderlaufbuchse oder in einer Zylinderbohrung eines Zylinder-Kurbelgehäuses aus einer jeweiligen übereutektischen Al-Si-Legierung feingedreht wird.

## Claims

1. A method of machining, especially turning, with a diamond cutting tool, **characterised in that**
- a synthetic monocrystal diamond is used for machining a component made of a hypereutectic aluminium-silicon alloy, wherein
- the diamond cutting edge used has a turning-centre radius r = 0.2 - 0.5 mm, a clearance angle α = 5° - 8°, an effective cutting angle γ = 0° - +6° and a main set angle κ = 90° - 75°.

2. A method according to claim 1, **characterised in that** an Al=Si alloy with size 5 - 100 µm silicon grains is machined with a diamond cutting edge having a turning-centre radius r = 0.4 mm, a clearance angle α = 7°, an effective cutting angle γ = 0° and a main set angle κ = 75°.

3. A method according to claim 1 or 2, **characterised by** use on interacting bearing surfaces or sliding surfaces of a component made of an Al-Si alloy.

4. A method according to claim 3, **characterised in that** a cylindrical bearing surface in a cylindrical bush or in a cylindrical bore of a cylindrical crankcase, each of hypereutectic Al-Si alloy, is precision-turned.

## Revendications

1. Procédé pour l'usinage par enlèvement de copeaux avec un outil de coupe en diamant, en particulier le tournage,
**caractérisé en ce qu'**
- un diamant monocristallin synthétique est utilisé pour l'usinage d'une pièce constituée d'un alliage aluminium-silicium hypereutectique, dans lequel
- on utilise une coupe par diamant avec un diamètre de pointe r = 0,2 - 0, 5 mm, un angle de dépouille α = 5° - 8°, un angle de dégagement γ = 0°- + 6° et un angle principal d'attaque K = 90° - 75°,

2. Procédé selon la revendication 1,
**caractérisé en ce que**
pour l'usinage d'un alliage Al-Si, avec grains de silicium de la taille de 5 à 100 µm, une coupe par diamant avec un diamètre de pointe r = 0,4 mm, un angle de dépouille α = 7°, un angle de dégagement γ = 0° et un angle principal d'attaque K = 75°, est utilisée.

3. Procédé selon l'une des revendications 1 ou 2,
**caractérisé par**
l'utilisation d'une surface de roulement/glissement tribologique d'une pièce constituée d'un alliage Al-Si.

4. Procédé selon la revendication 3,
**caractérisé en ce qu'**
une glissière cylindrique dans un coussinet de cylindre ou dans un alésage de cylindre d'un carter cylindrique de vilebrequin, constitués respectivement d'un alliage Al-Si hypereutectique, est façonnée par tournage de précision.
